Europäisches Patentamt

(19) European Patent Office

Office européen des brevets

(11) Numéro de publication : **0 297 015 B1**

## (12) FASCICULE DE BREVET EUROPEEN

(45) Date de publication du fascicule du brevet :
07.08.91 Bulletin 91/32

(51) Int. Cl.$^5$ : **A01K 1/01**

(21) Numéro de dépôt : **88470009.7**

(22) Date de dépôt : **10.06.88**

(54) **Caisse d'aisance pour animaux domestiques avec séparation automatique des déjections solides de la litière.**

(30) Priorité : 23.06.87 FR 8708912

(43) Date de publication de la demande :
28.12.88 Bulletin 88/52

(45) Mention de la délivrance du brevet :
07.08.91 Bulletin 91/32

(84) Etats contractants désignés :
AT BE CH DE ES FR GB GR IT LI LU NL SE

(56) Documents cités :
EP-A- 0 154 540
FR-A- 2 566 621
US-A- 4 120 264

(73) Titulaire : **Laroche, Jean Luc**
**6, rue du Pré Saint Arnould**
**F-88100 Saint Dié (FR)**

(72) Inventeur : **Laroche, Jean Luc**
**6, rue du Pré Saint Arnould**
**F-88100 Saint Dié (FR)**

(74) Mandataire : **Poupon, Michel**
**3, rue Thiers BP 421**
**F-88011 Epinal Cédex (FR)**

## Description

La présente invention a pour objet une caisse d'aisance ou bac pour animaux domestiques, en particulier pour chats, du type comportant une enceinte munie d'au moins une entrée/sortie pour l'animal, d'une litière plus ou moins absorbante et de moyens pour séparer automatiquement les déjections solides de la litière.

Il est d'usage d'utiliser pour les besoins naturels des animaux domestiques, plus particulièrement des chats, des caisses d'aisance ou bacs où les déjections, solides et liquides, sont reçues par une litière.

L'animal préférant son espace et son intimité, il est nécessaire de respecter les critères génétiques qui font que le chat, par exemple, suit un processus consistant à creuser, puis à éliminer et à recouvrir. Si les conditions permettent d'y parvenir ne sont pas réunies, l'animal ira faire ses besoins ailleurs.

Afin d'éviter les odeurs, et pour assurer la propreté de la litière, celle-ci doit être nettoyée régulièrement et changées à intervalles réguliers. Ceci nécessite bien entendu la présence d'une personne pour l'entretien, ce qui est parfois difficile lorsque l'on désire s'absenter et laisser le ou les animaux domestiques seuls à la maison.

Il a déjà à cette fin été proposé un dispositif permettant la séparation automatique des déjections solides de la litière utilisée, par exemple par le brevet FR 2566621.

Ce dispositif est constitué d'une trémie qui distribue la litière et d'un filtre récupérateur de la litière usagée, disposée sur une feuille mobile en translation, les déjections solides étant séparées de la litière par une grille pour être reçues dans une chambre collectrice où elles sont stockées et d'où elles peuvent être évacuées périodiquement.

Ce dispositif présente un certain nombre d'inconvénients.

Tout d'abord il nécessite une alimentation en litière, une alimentation en film, une évacuation de la litière usagée, à savoir au moins trois ensembles qui doivent fonctionner de manière automatique et synchrone. Il implique des mécanismes lourds et onéreux, et donc également des risques élevés de mauvais fonctionnement.

Par ailleurs, la litière est évacuée périodiquement, selon une période déterminée par l'utilisateur, ce qui offre deux inconvénients :

— il faut à chaque fois changer complétement la litière ;

— l'opération s'effectue que la litière soit souillée ou non.

Enfin, il présente des problèmes d'étanchéité sérieux des granulés de la litière par rapport au mécanisme d'entrainement.

Le document US-A-4120264 décrit une caisse d'aisance comportant toutes les caractéristiques du préambule de la revendication 1.

La présente invention se propose de remédier aux inconvénients des dispositifs de l'art antérieur par les caractéristiques de la partie caractérisante de la revendication 1.

Conformément à l'invention, ce résultat est obtenu avec une caisse d'aisance, ou bac, pour animaux domestiques, en particulier pour chats, du type comportant une enceinte munie d'au moins une entrée/sortie pour l'animal, d'une litière plus ou moins absorbante et de moyens pour séparer automatiquement les déjections solides de la litière, ladite caisse d'aisance étant constituée d'une enceinte cylindrique ou polygonale à axe horizontale recevant à sa partie basse la litière, ladite enceinte étant munie de moyens permettant une rotation de 360° autour de son axe longitudinal, caractérisé en ce qu'elle comporte à l'intérieur, d'une part une herse solidaire en rotation du cylindre et fixée sur la face interne de celui-ci et d'autre part un réceptacle escamotable automatiquement entre une position de repos où il est effacé contre la paroi interne du cylindre et une position d'utilisation où il se rapproche du plan vertical médian du cylindre pour coopérer avec la herse afin de recevoir les déjections récupérées par celle-ci lors de son passage au travers de la litière, ainsi que des moyens commandant automatiquement le déclenchement de la mise en rotation du cylindre à la sortie de l'animal, après que l'entrée puis la sortie aient été détectées.

Ce dispositif peut fonctionner aussi longtemps que désiré, de manière entièrement automatique, et en toute sécurité. Il est peu onéreux dans son fonctionnement dans la mesure où la litière est nettoyée à chaque entrée/sortie de l'animal, sans être jetée.

Il peut être utilisé tant en intérieur qu'en extérieur.

Il permet également l'utilisation de toutes les sortes de litières allant d'un extrème à l'autre à savoir :

— litières hyper-absorbantes avec formation en blocs solides par les excréments et l'urine ;

— litières non absorbantes avec perforations du tambour pour permettre l'évacuation de l'urine ou moyen d'évacuation sur la génératrice du tambour.

L'invention permet de respecter les consignes d'utilisation des fabricants de litières à savoir :

— épaisseur de 3 à 7 cm ;

— élimination des matières sèches ;

— homogénéisation de la litière ;

— possibilité d'adjonction et de remise à niveau par trémie d'alimentation en litière neuve.

L'opération de rotation de 360° du cylindre et de la herse qui en est solidaire permet en outre une homogénéisation et une aération de la litière.

Le bac d'aisance conforme à l'invention pourra être réalisé en tout matériau compatible avec les conditions d'utilisation. Avantageusement, il sera réalisé entièrement en matière plastique.

On comprendra mieux l'invention à l'aide de la description ci-après d'un mode de mise en oeuvre, donné à titre d'exemple non limitatif, en référence aux dessins annexés dans lesquels :

— la figure 1 est une vue schématique en coupe transversale d'une caisse d'aisance conforme à l'invention en position d'utilisation par l'animal ;

— la figure 2 est une vue schématique en coupe transversale d'une caisse d'aisance conforme à l'invention en position d'élimination des déjections solides ;

— la figure 3 est une vue éclatée des différents éléments fonctionnels consitutifs de la caisse conforme à l'invention à savoir :

• figure 3A : enceinte en perspective,

• figure 3B : réceptacle en perspective,

• figure 3C : herse en perspective,

• figure 3D : tambour support de l'enceinte en perspective.

La caisse d'aisance selon l'invention, généralement référencée (1), est composée essentiellement d'une enceinte cylindrique ou polygonale à axe horizontal (2).

Cette enceinte est supportée par des galets (3, 4) ou pignons qui peuvent l'entrainer en rotation autour dudit axe horizontal. En variante, l'enceinte peut être suspendue à un ensemble poulies-courroies.

La caisse reçoit en sa partie basse une quantité adéquate de litière (5).

A l'intérieur de la caisse, on trouve :

— une herse (6) fixée sur la paroi interne de l'enceinte ;

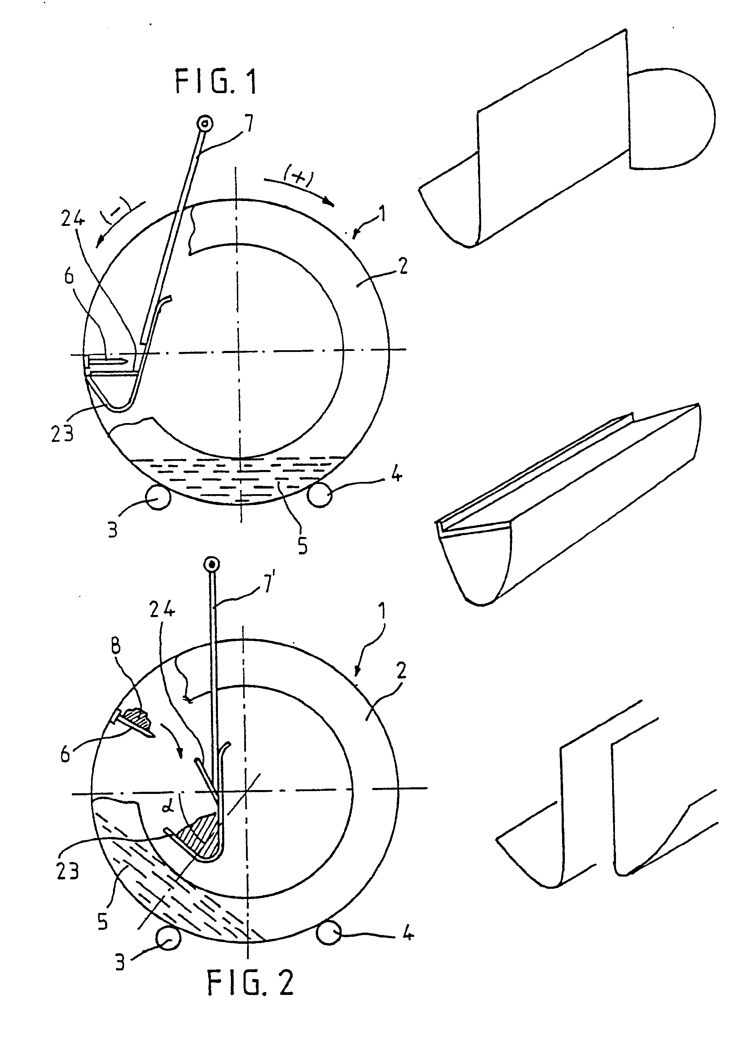

— un réceptacle (7) mobile entre deux positions respectivement de repos (Figure 1) et de fonctionnement (7'), comme représenté à la figure 2.

Le fonctionnement est le suivant.

Lorsque le dispositif se déclenche, le réceptacle (7) se déplace vers la position (7'), c'est-à-dire en position verticale et se rapprochant du plan médian du cylindre (2) où il peut coopérer avec la herse (6) qui amène avec elle les déjections solides (8) récupérées lors du passage au travers de la litière (5). Par gravité, lesdites déjections tombent alors dans le réceptacle (7).

On décrira maintenant séparément chacun des éléments constitutifs de la caisse d'aisance conforme à l'invention.

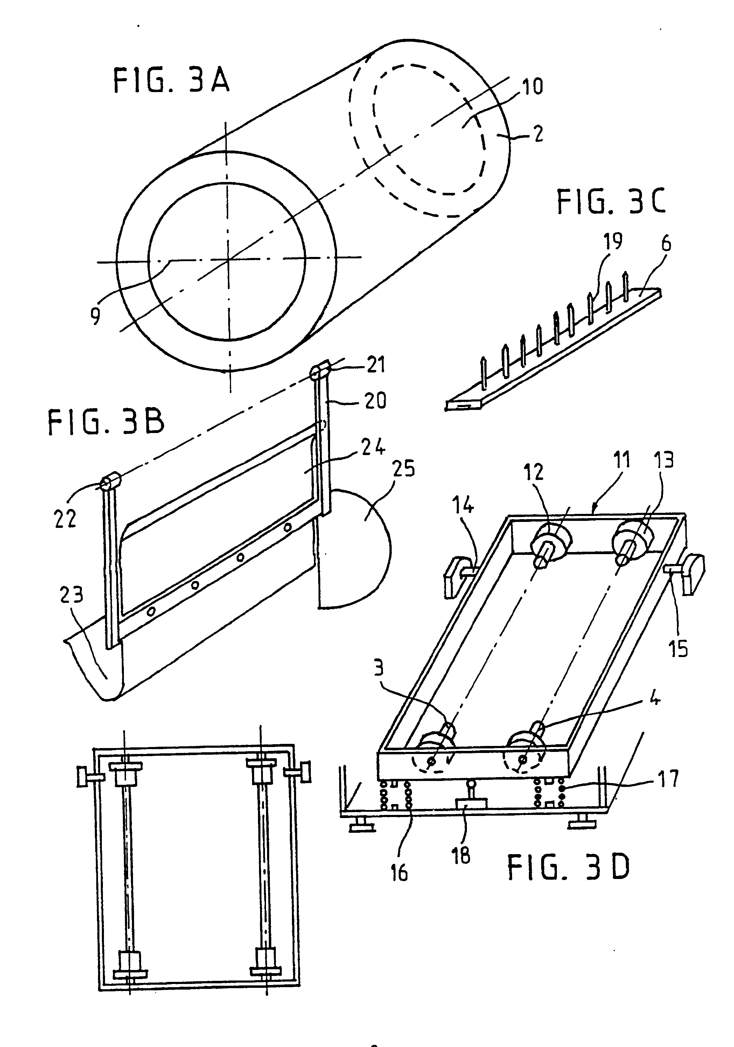

L'enceinte (2), représentée figure 3A, comporte au moins une entrée/sortie (9) et éventuellement une entrée/sortie opposée (10). La sortie (10) pourra être équipée d'une aération, permettant d'établir une circulation d'air entre l'entrée et ladite sortie, avec éventuellement interposition du filtre à charbon actif ou autre pour débarrasser l'air des mauvaises odeurs éventuelles.

L'enceinte est disposée sur un support (11) muni de quatre galets (3, 4, 12, 13) servant à la mise en rotation de l'enceinte (2) autour de son axe horizontal.

Les galets seront entrainés de manière synchrone, de manière mécanique en elle-même connue.

Le cadre support (11) forme bascule et est articulé à une extrémité autour d'un axe ou de deux demi-axes (14, 15) et est supporté à son autre extrémité, côté entrée de l'enceinte, par deux plots à ressort (16, 17) entre lesquels est disposé un contacteur de présence (18). L'entrée de l'animal dans l'enceinte actionne le contacteur (18). Dès que l'animal quitte l'enceinte, le contacteur est déclenché, ce qui entraine la mise en rotation de l'enceinte et le déplacement conjoint du réceptacle (7) vers la position (7').

Lorsque l'enceinte est suspendue, ce dispositif sera remplacé par un capteur de pesage détectant de la même manière l'entrée/sortie de l'animal.

La rotation de l'enceinte (2) entraine la rotation conjointe de 360° de la herse (6) qui y est fixée et qui comporte des dents (19), disposées radialement par rapport à ladite enceinte, qui traversent la masse de litière (5) en retenant les déjections solides et en les entrainant. L'espacement des dents (19) sur la herse sera déterminé en conséquence, en fonction de la granulométrie usuelle des litières.

La herse (6) coopère avec un réceptacle (7).

Ce réceptacle se compose d'un cadre (20) articulé sur deux demi-axes en (21, 22). Le cadre supporte un bac (23). Il peut s'agir d'un bac simple. Il peut également s'agir d'un bac muni d'une feuille plastique autofermante lors de son extraction et/ou d'un bac avec couvercle rabattable automatiquement (24) servant à l'étanchéité et combattre les odeurs.

On peut également concevoir l'utilisation de deux réceptacles, disposés symétriquement par rapport au plan médian de l'enceinte.

Grâce à ce système, l'enceinte se nettoie automatiquement à chaque entrée/sortie de l'animal.

En fait, la rotation de l'enceinte pourra être supérieure à 360°, et sera de au moins 360°. Elle s'effectuera d'abord selon 360° + α dans un sens, puis de α dans le sens inverse afin de ramener le plan de la litière à l'horizontale, du fait de l'entrainement en rotation de celle-ci. On peut évidemment prévoir que l'enceinte fera deux tours complets si on le désire.

Bien entendu de nombreux aménagements complémentaires peuvent être apportés sans sortir du cadre de l'invention tels que par exemple :

— mise en rotation de l'appareillage par l'intermédiaire d'une temporisation réglable par l'utilisateur en fonction du nombre d'animaux utilisant l'appareil, par exemple une fois toute les six heures, toutes les vingt quatre heures, etc...

— disposition de la caisse d'aisance dans un coffre formant meuble, muni de manière compacte de tous les périphériques (motorisation, alimentations diverses, logement pour nourriture et accessoires divers, coin repas pour l'animal) ;

— dispositif de mise à l'horizontale ou de préférence légèrement inclinée vers l'arrière, de l'enceinte ;

— perforation de l'enceinte en partie basse pour récupérer l'urine dans un bac disposé sous l'enceinte.

On reprendra ci-après divers aménagements pouvant être prévus pour chaque élément du bac d'aisance conforme à l'invention.

Ainsi le tambour peut affecter tout structure compatible avec sa fonction et sa mise en rotation. Il peut être cylindrique, conique, ovoïde, polygonale, etc...

Il pourra comporter tous les systèmes électriques ou électroniques connus permettant la détection de présence de l'animal. Il pourra par exemple, à cette fin, comporter une porte battante.

Le tambour pourra être complétement amovible ou comporter une partie amovible pour l'élimination et le remplissage en litière, par exemple toutes les semaines.

Pour ce faire, on peut également prévoir un sac accroché à la herse à l'extérieur du tambour, que l'on fait tourner en sens inverse pour récupérer toute la litière.

Afin d'éviter la projection des granulés de litière lorsque le chat gratte, le réceptacle sera muni d'une plaque (25) obturant la partie arrière, si celle-ci n'est pas utilisée en entrée/sortie.

De même, et pour la même fin, l'entrée/sortie principale du meuble sera équipée d'un moyen en lui-même connu, type chatière, qui pourra également coopérer à la détection de l'entrée/sortie.

La herse, quant à elle, sera disposée radialement de manière fixe ou rétractable.

Elle pourra être également totalement amovible ce qui permet de la charger en fonction des granulométries des différentes litières.

La herse pourra, comme indiqué précédemment, servir à vider la litière du réceptacle soit grâce à un sachet qui en est rendu solidaire, soit en obturant les espaces entre les dents de la herse, celle-ci se transformant alors en racloir et déversant la litière dans le réceptacle central.

Le réceptacle assurera, en outre, la protection à l'égard de la herse, car il masque celle-ci en position escamotée.

Enfin, le bac selon l'invention sera disposé dans un habillage externe formant meuble et permettant l'adaptation à tous les types de mobiliers et toutes les pièces de la maison.

Un grand nombre d'aménagements sont possibles sur ce meuble, non limitativement :

— porte d'entrée/sortie ;

— alimentation en litière fraiche ;

— alimentation automatique en eau ;

— lumière témoin de bon fonctionnement avec alerte, par exemple en cas de remplissage du réceptacle ;

— prévision d'un modèle simplifié avec commande manuelle (manivelle) qui peut également être un système d'appoint sur le modèle perfectionné, en cas de panne de courant.

Bien entendu, le dispositif conforme à l'invention peut être présenté en Kit.

**Revendications**

1. Caisse d'aisance, ou bac, pour animaux domestiques, en particulier pour chats, du type comportant une enceinte munie d'au moins une entrée/sortie pour l'animal, d'une litière plus ou moins absorbante et de moyens pour séparer automatiquement les déjections solides de la litière, ladite caisse d'aisance étant constituée d'une enceinte (2) cylindrique ou polygonale à axe horizontale recevant à sa partie basse la litière, ladite enceinte étant munie de moyens permettant une rotation de 360° autour de son axe longitudinal, caractérisé en ce qu'elle comporte à l'intérieur, d'une part une herse (6) solidaire en rotation du cylindre et fixée sur la face interne de celui-ci et d'autre part un réceptacle (7) escamotable automatiquement entre une position de repos où il est effacé contre la paroi interne du cylindre et une position d'utilisation où il se rapproche du plan vertical médian du cylindre pour coopérer avec la herse afin de recevoir les déjections récupérées par celle-ci lors de son passage au travers de la litière, ainsi que des moyens commandant automatiquement le déclenchement de la mise en rotation du cylindre à la sortie de l'animal, après que l'entrée puis la sortie aient été détectées.

2. Caisse d'aisance selon la revendication 1, caractérisée en ce que le réceptacle comporte une plaque (25) obturant la partie arrière de la caisse.

3. Caisse d'aisance selon l'une quelconque des revendications 1 et 2, caractérisée en ce que l'enceinte est supportée par des galets (3, 4) ou pignons qui peuvent l'entrainer en rotation.

4. Caisse d'aisance selon l'une quelconque des revendications 1 et 2, caractérisée en ce que l'enceinte est suspendue à un ensemble poulies-courroies.

5. Caisse d'aisance selon la revendication 3, caractérisée en ce qu'elle comporte un contacteur de présence (18) commandant la mise en rotation, respectivement l'arrêt, de l'enceinte.

6. Caisse d'aisance selon la revendication 4, caractérisée en ce qu'elle comporte un capteur de pesage commandant la mise en rotation respectivement l'arrêt, de l'enceinte.

7. Caisse d'aisance selon l'une quelconque des revendications 1 à 6, caractérisée en ce que le réceptacle (7) se compose d'un cadre (20) articulé sur deux demi-axes (21, 22), ledit cadre supportant un bac (23).

8. Caisse d'aisance selon la revendication 7, caractérisée en ce que le bac (23) est muni d'une feuille plastique autofermante.

9. Caisse d'aisance selon l'une quelconque des revendications 7 et 8, caractérisée en ce que le bac (23) comporte un couvercle (24) rabattable automatiquement.

10. Caisse d'aisance selon l'une quelconque des revendications 1 à 9, caractérisée en ce qu'elle comporte en partie basse un moyen d'évacuation de l'urine.

**Claims**

1. A comfort box or container for domestic animals, particularly for cats, of the type comprising an enclosure provided with at least one entrance/exit for the animal, a more or less absorbent litter and means of automatically separating solid dejector from the litter, the said comfort box consisting of a cylindrical or polygonal enclosure (2) of horizontal axis receiving the litter in its bottom part, the said enclosure being provided with means permitting of 360° rotation about its longitudinal axis, characterised in that it comprises or the inside on the one hand a harrow (6) rotationally rigid with the cylinder and fixed on the inside face thereof and on the other a receptacle (7) which can be automatically concealed between a rest position in which it is concealed against the inner wall of the cylinder and a position of use in which it is close to the vertical median plane of the cylinder in order to cooperate with the harrow in order to receive the dejector recovered by this latter during its passage through the litter (2), together with means which automatically control triggering of rotation of the cylinder upon exit of the animal after the entry and then the exit have been detected.

2. A comfort box according to claim 1, characterised in that the receptacle comprises a plate (25) which occludes the rear part of the box.

3. A comfort box according to any one of claims 1 and 2, characterised in that the enclosure is supported by rollers (3, 4) or pinions which can impart a rotary drive to it.

4. A comfort box according to any one of claims 1 and 2, characterised in that the enclosure is suspended from a pulley-belt assembly.

5. A comfort box according to claim 3, characterised in that it comprises a presence contactor (18) which operates the rotation or respectively the stoppage of the enclosure.

6. A comfort box according to claim 4, characterised in that it comprises a weight sensor which controls the rotation and respectively the stoppage of the enclosure.

7. A comfort box according to any one of claims 1 to 6, characterised in that the receptacle (7) is composed of a frame (20) articulated on two half-axes (21, 22), the said frame supporting a container (23).

8. A comfort box according to claim 7, characterised in that the container (23) is provided with a self-closing plastic film.

9. A comfort box according to any one of claims 7 or 8, characterised in that the container (23) comprises an automatically closeable cover (24).

10. A comfort box according to any one of claims 1 to 9, characterised in that it comprises in its bottom a means of evacuating urine.

**Patentansprüche**

1. Toilette oder Auffangbehältnis für Haustiere, insbesondere für Katzen, mit einem Behälter mit wenigstens einem Eingang/Ausgang für das Tier, mit mehr oder weniger absorbierendem Streusand sowie mit einer Einrichtung zum automatischen Aussondern der festen Exkremente aus dem Streusand, wobei die Toilette einen zylindrischen oder polygonalen Behälter (2) mit einer horizontalen Achse zur Aufnahme des Streusandes in seinem Bodenbereich aufweist und dabei der Behälter mit einer Einrichtung ausgestattet ist, mit der er um 360° um seine Längsachse drehbar ist, **dadurch gekennzeichnet**, daß der Behälter im Innern zum einen einen Rost (6), der zusammen mit dem Zylinder drehbar und an dessen Innenseite angeordnet ist, sowie zum anderen einen Sammelbehälter (7) aufweist, der automatisch zwischen einer Ruhestellung, in der er an der Innenwand des Zylinders anliegt, und einer Benutzungsstellung bewegbar ist, in der er sich der vertikalen Mittelebene des Zylinders nähert und in Wechselwirkung mit dem Rost (6) tritt, um die diesem aufgegebenen Exkremente während seines Durchganges durch den Streusand diesem zuzuführen, und daß eine automatische Steuereinrichtung den Zylinder in eine Drehbewegung versetzt, wenn das Tier die Toilette verläßt, nachdem der Zugang und anschließend der Weggang festgestellt worden ist.

2. Toilette nach Anspruch 1, dadurch gekennzeichnet, daß der Sammelbehälter eine Platte (25) aufweist, die den Bereich hinter der Toilette verschließt.

3. Toilette nach Anspruch 1 oder 2, dadurch gekennzeichnet, daß der Behälter durch Rollen (3, 4) oder Getrieberäder getragen wird, mittels denen der Behälter in Drehung versetzbar ist.

4. Toilette nach Anspruch 1 oder 2, dadurch gekennzeichnet, daß der Behälter an einer Mehrzahl von Riemenrollen aufgehängt ist.

5. Toilette nach Anspruch 3, dadurch gekennzeichnet, daß ein Druckschalter (18) vorgesehen ist, der den Behälter in Drehung versetzt bzw. ihn wieder anhält.

6. Toilette nach Anspruch 4, dadurch gekennzeichnet, daß eine Wiegeeinrichtung vorgesehen ist, die den Behälter in Drehung versetzt bzw. ihn wieder anhält.

7. Toilette nach einem der Ansprüche 1 bis 6, dadurch gekennzeichnet, daß der Sammelbehälter (7) ein Gestell (20) aufweist, das an zwei Halbachsen (21, 22) schwenkbar gelagert ist und wobei das Gestell (20) ein Auffangbehältnis (23) aufweist.

8. Toilette nach Anspruch 7, dadurch gekennzeichnet, daß das Auffangbehältnis (23) eine selbstschließende Kunststoffolie aufweist.

9. Toilette nach Anspruch 7 oder 8, dadurch gekennzeichnet, daß das Auffangbehältnis (23) einen automatisch herunterklappbaren Deckel (24) aufweist.

10. Toilette nach einem der Ansprüche 1 bis 9, dadurch gekennzeichnet, daß diese im Bodenbereich eine Einrichtung zum Abführen von Urin aufweist.

# FIG. 1

# FIG. 2

FIG. 3A

FIG. 3C

FIG. 3B

FIG. 3D